# EUROPÄISCHE PATENTANMELDUNG

(11) **EP 3 868 535 A1**
(43) Veröffentlichungstag der Anmeldung: **25.08.2021**
(21) Anmeldenummer: 21158313.3
(22) Anmeldetag: 21.02.2021
(51) Int. Cl.: B29C 33/42, B29C 39/26, B29C 51/30, B29C 49/48, B29C 49/42

(54) **WERKZEUG ZUR HERSTELLUNG VON PRODUKTEN MITTELS EINES GIESS-, BLAS- ODER TIEFZIEH-VORGANGS**

(30) Priorität: 24.02.2020 DE 202020100982 U
(71) Anmelder: POLY-TOOLS bennewart GmbH, 66978 Rheinland-Pfalz Donsieders (DE)
(72) Erfinder: Schura, Arnold, 66978 Donsieders (DE)
(74) Vertreter: Patentanwaltskanzlei Vièl & Wieske PartGmbB

(57) **Zusammenfassung**

Werkzeug zur Herstellung von Produkten mittels eines Gieß-, Blas- oder Tiefzieh-Vorgangs. Das Werkzeug weist einen als Ausnehmung gestalteten Kennzeichnungsmittelträger auf für eine Aufnahme von ersten Kennzeichnungselementen (1). Der als Ausnehmung gestaltete Kennzeichnungsmittelträger sowie die ersten Kennzeichnungselemente (1) sind zueinander korrespondierend so ausgestaltet, dass die ersten Kennzeichnungselemente (1) formschlüssig (201) in verschiedenen Positionen mit unterschiedlichen und definierten Orientierungen in den als Ausnehmung gestalteten Kennzeichnungsmittelträger einsetzbar sind. Die ersten Kennzeichnungselemente weisen (1) eine als Ausnehmung gestaltete Aufnahme für zweite Kennzeichnungselemente (2) auf. Die als Ausnehmung gestaltete Aufnahme der ersten Kennzeichnungselemente (1) sowie die zweiten Kennzeichnungselemente (2) sind zueinander korrespondierend so ausgestaltet, dass die zweiten Kennzeichnungselemente (2) formschlüssig (204, 207) in verschiedenen Positionen mit unterschiedlichen und definierten Orientierungen in die als Ausnehmung gestaltete Aufnahme der ersten Kennzeichnungselemente (1) einsetzbar sind.

## Beschreibung

Die vorliegende Erfindung betrifft ein Werkzeug zur Herstellung von Produkten mittels eines Gieß-, Blas- oder Tiefzieh-Vorgangs nach dem Oberbegriff des Anspruchs 1.

Der Anmelderin sind Werkzeuge zur Herstellung von Produkten mittels eines Gieß-, Blas- oder Tiefzieh-Vorgangs bekannt. Diese Werkzeuge weisen ein Flächenprofil auf, das als Negativform dem Flächenprofil der Oberfläche eines herzustellenden Produktes entspricht.

In dem Flächenprofil können Vertiefungen oder Erhöhungen vorhanden sein, die eine Negativform für Kennzeichnungen darstellen, die als Erhöhung aus der Oberfläche des Produktes hervortreten oder als Vertiefung in die Oberfläche des Produktes hineinragen. Diese Kennzeichnungen können beispielsweise darin bestehen, dass der Herstellungsmonat und das Herstellungsjahr des Produktes durch die Kennzeichnung angezeigt werden.

Nach der vorliegenden Erfindung soll ein Werkzeug vorgeschlagen werden, mit dem die Kennzeichnung von Produkten wesentlich vereinfacht wird.

Diese Aufgabe wird nach der vorliegenden Erfindung gemäß Anspruch 1 gelöst, indem das Werkzeug in dem Flächenprofil einen als Ausnehmung gestalteten Kennzeichnungsmittelträger aufweist für eine Aufnahme von ersten Kennzeichnungselementen. Der als Ausnehmung gestaltete Kennzeichnungsmittelträger sowie die ersten Kennzeichnungselemente korrespondieren zueinander derart, dass die ersten Kennzeichnungselemente formschlüssig in verschiedenen Positionen mit unterschiedlichen und definierten Orientierungen in den als Ausnehmung gestalteten Kennzeichnungsmittelträger einsetzbar sind.

Weiterhin weisen die ersten Kennzeichnungselemente eine als Ausnehmung gestaltete Aufnahme für zweite Kennzeichnungselemente auf. Hierbei korrespondieren die als Ausnehmung gestaltete Aufnahme der ersten Kennzeichnungselemente sowie die zweiten Kennzeichnungselemente derart zueinander, dass die zweiten Kennzeichnungselemente formschlüssig in verschiedenen Positionen mit unterschiedlichen und definierten Orientierungen in die als Ausnehmung gestaltete Aufnahme der ersten Kennzeichnungselemente einsetzbar sind.

Die in die jeweiligen Ausnehmungen eingesetzten ersten und zweiten Kennzeichnungselemente sind Bestandteil des Flächenprofils des Werkzeugs, das als Negativform dem Flächenprofil der Oberfläche eines herzustellenden Produktes entspricht.

Weiterhin weisen die ersten und die zweiten Kennzeichnungselemente Vertiefungen oder Erhöhungen auf, die eine Negativform für die Kennzeichnung sind, die als Erhöhung aus der Oberfläche des Produktes hervortreten oder als Vertiefung in die Oberfläche des Produktes hineinragen.

Es geht bei der vorliegenden Erfindung darum, eine Kennzeichnung von Produkten vorzunehmen, die mittels eines dazu üblichen Werkzeugs in einem Gieß-, Blas- oder Tiefziehvorgang hergestellt werden. Die Oberfläche wird dabei durch die Form des Werkzeugs definiert. Es ist bekannt, in das Werkzeug entsprechende Prägungen einzubringen, die in dem Werkzeug Vertiefungen darstellen. In diesem Fall sind die Kennzeichnungen "Materialerhöhungen", die aus der Oberfläche des Produktes hervortreten. Es ist auch möglich, die Prägungen in der Oberfläche des Werkzeugs als Erhöhungen auszubilden. In diesem Fall sind die Kennzeichnungen Vertiefungen in der Oberfläche des Produktes.

Bei der vorliegenden Erfindung erweist es sich als vorteilhaft, dass die Kennzeichnungen, die auf die Oberfläche der herzustellenden Produkte aufgebracht werden sollen, einfach angepasst werden können. Diese Anpassung kann erfolgen, indem die Kennzeichnungselemente ausgetauscht werden.

Außer diesem Austausch der Kennzeichnungselemente ergibt sich ein weiterer Vorteil daraus, dass die ersten und die zweiten Kennzeichnungselemente jeweils mit einer definierten Orientierung eingesetzt werden. Weil die Kennzeichnungselemente in den verschiedenen Positionen mit den unterschiedlichen und definierten Orientierungen formschlüssig gehalten werden, kann die Orientierung, mit der dieses Kennzeichnungselement eingesetzt ist, wiederum eine weitere Kennzeichnung sein, die auf das Produkt aufgebracht wird.

Wird das erste Kennzeichnungselement mit einer bestimmten Orientierung in den Kennzeichnungsmittelträger eingesetzt, wird diese Orientierung des ersten Kennzeichnungselementes auch auf das Produkt aufgeprägt (bzw. in das Produkt eingeprägt).

Dies gilt ebenso für die Orientierung des zweiten Kennzeichnungselementes, dessen Orientierung relativ zum ersten Kennzeichnungselement veränderbar ist. Auch diese Orientierung des zweiten Kennzeichnungselementes wird entsprechend auf das Produkt aufgeprägt (bzw. in das Produkt eingeprägt). Diese Orientierung des zweiten Kennzeichnungselementes kann eine Information beinhalten durch die Ausrichtung der Orientierung relativ zur Ausrichtung der Orientierung des ersten Kennzeichnungselementes.

Weil die Orientierung des ersten Kennzeichnungselementes relativ zur Orientierung des Produktes wiederum einen Informationsinhalt vermittelt, kann das zweite Kennzeichnungselement ebenfalls einen Informationsinhalt vermitteln durch dessen Orientierung relativ zum Produkt. Die Orientierung des zweiten Kennzeichnungselementes relativ zum Produkt ist definiert, wenn sowohl die Orientierung des zweiten Kennzeichnungselementes relativ zum ersten Kennzeichnungselement definiert ist als auch die Orientierung des ersten Kennzeichnungselementes relativ zum Produkt.

Bei der Ausgestaltung des Werkzeugs nach Anspruch 2 besteht der als Ausnehmung gestaltete Kennzeichnungsmittelträger aus einer kreisförmigen Öffnung mit einer Innenverzahnung. Die ersten Kennzeichnungsmittel bestehen aus kreisförmigen Scheiben oder Ringen mit einer Außenverzahnung an der Umfangsseite der kreisförmigen Scheiben oder Ringe. Dabei korrespondieren
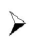 der Radius der kreisförmigen Öffnung, die den als Ausnehmung gestalteten Kennzeichnungsmittelträger bildet,
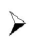 der Radius der kreisförmigen Scheiben oder Ringe der ersten Kennzeichnungselemente sowie
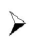 die Anzahl und Größe der Zähne der Innenverzahnung der kreisförmigen Öffnung, die den als Ausnehmung gestalteten Kennzeichnungsmittelträger bildet, und
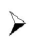 die Anzahl und Größe der Zähne der Außenverzahnung der ersten Kennzeichnungselem ente
derart miteinander, dass die ersten Kennzeichnungselemente formschlüssig in verschiedenen Positionen mit unterschiedlichen und definierten Orientierungen in die Aufnahme des Kennzeichnungsmittelträgers einsetzbar sind.

Die Radien korrespondieren beispielsweise insoweit miteinander, als dass der Radius der kreisförmigen Scheiben oder Ringe der ersten Kennzeichnungselemente zuzüglich der Höhe eines Zahns der Außenverzahnung der ersten Kennzeichnungselemente gleich dem Radius der kreisförmigen Öffnung ist, die den als Ausnehmung gestalteten Kennzeichnungsmittelträger bildet. Dieser Radius der kreisförmigen Öffnung wird dabei so gemessen, als wären die Zähne der Innenverzahnung nicht vorhanden. Die Anzahl und Größe der Zähne der Außenverzahnung sowie der Innenverzahnung korrespondieren insoweit miteinander, als die Anzahl und die Größe der Lücken zwischen den Zähnen der Innenverzahnung gleich der Anzahl und der Größe der Zähne der Außenverzahnung entspricht. In Verbindung mit der Kreisform der Öffnung, die den als Ausnehmung ausgestalteten Kennzeichnungsmittelträger bildet, ist damit das erste Kennzeichnungselement formschlüssig in den Kennzeichnungsmittelträger einsetzbar.

Formschlüssig bedeutet dabei, dass das erste Kennzeichnungselement gegen eine Veränderung der Orientierung relativ zum Kennzeichnungsmittelträger formschlüssig gehalten wird.

Die Anzahl der möglichen Orientierungen, in denen das erste Kennzeichnungselement relativ zum Kennzeichnungsmittelträger einsetzbar ist, ergibt sich dabei aus der Anzahl der Zähne der Außenverzahnung des ersten Kennzeichnungselementes bzw. aus der korrespondierenden Anzahl der Zähne der Innenverzahnung des Kennzeichnungsmittelträgers.

Anspruch 3 betrifft ein Werkzeug, bei dem die als Ausnehmung gestaltete Aufnahme der ersten Kennzeichnungselemente aus einer kreisförmigen Öffnung mit einer Innenverzahnung besteht. Die zweiten Kennzeichnungsmittel bestehen aus kreisförmigen Scheiben mit einer Außenverzahnung an der Umfangsseite der kreisförmigen Scheibe. Dabei korrespondieren
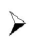 der Radius der kreisförmigen Öffnung der ersten Kennzeichnungselemente,
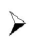 der Radius der kreisförmigen Scheibe der zweiten Kennzeichnungselemente sowie
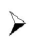 die Anzahl und Größe der Zähne der Innenverzahnung der Aufnahme der ersten Kennzeichnungselemente und
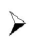 die Anzahl und Größe der Zähne der Außenverzahnung der zweiten Kennzeichnungselemente
derart miteinander, dass die zweiten Kennzeichnungselemente formschlüssig in verschiedenen Positionen mit unterschiedlichen und definierten Orientierungen in die Aufnahme der ersten Kennzeichnungselemente einsetzbar sind.

Die Radien korrespondieren beispielsweise insoweit miteinander, als dass der Radius der kreisförmigen Scheiben oder Ringe der zweiten Kennzeichnungselemente zuzüglich der Höhe eines Zahns der Außenverzahnung der zweiten Kennzeichnungselemente gleich dem Radius der kreisförmigen Öffnung ist, die die als Ausnehmung gestaltete Öffnung des ersten Kennzeichnungselementes bildet. Dieser Radius der kreisförmigen Öffnung wird dabei so gemessen, als wären die Zähne der Innenverzahnung nicht vorhanden. Die Anzahl und Größe der Zähne der Außenverzahnung sowie der Innenverzahnung korrespondieren insoweit miteinander, als die Anzahl und die Größe der Lücken zwischen den Zähnen der Innenverzahnung gleich der Anzahl und der Größe der Zähne der Außenverzahnung entspricht. In Verbindung mit der Kreisform der Öffnung, die die als Ausnehmung ausgestaltete Aufnahme der ersten Kennzeichnungselemente bildet, ist damit das zweite Kennzeichnungselement formschlüssig in das erste Kennzeichnungselement einsetzbar.

Formschlüssig bedeutet dabei, dass das zweite Kennzeichnungselement gegen eine Veränderung der Orientierung relativ zum ersten Kennzeichnungselement formschlüssig gehalten wird.

Die Anzahl der möglichen Orientierungen, in denen das zweite Kennzeichnungselement relativ zum ersten Kennzeichnungselement einsetzbar ist, ergibt sich dabei aus der Anzahl der Zähne der Außenverzahnung des zweiten Kennzeichnungselementes bzw. aus der korrespondierenden Anzahl der Zähne der Innenverzahnung in der als Ausnehmung des ersten Kennzeichnungselementes gestalteten kreisförmigen Öffnung.

Bei der Ausgestaltung eines Werkzeugs nach Anspruch 4 sind die Kennzeichnungselemente an ihrem Außenumfang so aufgebaut, dass sich oberhalb einer ersten Scheibe eine zweite Scheibe ohne eine Außenverzahnung befindet, wobei der Radius der zweiten Scheibe zumindest so groß ist wie der Radius der ersten Scheibe zuzüglich der Höhe eines Zahns der Außenverzahnung.

Entsprechend ist dann die Öffnung, in das Kennzeichnungselement eingesetzt werden soll, auch so gestaltet, dass sich die Innenverzahnung in der Öffnung nur bis zu einer solchen Höhe erstreckt, die der Dicke der ersten Scheibe entspricht. Darüber weist die Öffnung keine Innenverzahnung auf. Damit entsteht in der Oberfläche des Produktes allenfalls eine wahrnehmbare kreisförmige Linie, die den Teil der Oberfläche des Produktes umgibt, in den die Oberfläche des Kennzeichnungselementes eingeprägt ist. Wenn das Kennzeichnungselement entsprechend passgenau zu dem Werkzeug gefertigt ist und flächenbündig zum Flächenprofil des Werkzeugs eingepasst wird und weiterhin im Wesentlichen ohne Abstand in die Öffnung einsetzbar ist, ist in dem Produkt nur die Prägung des Kennzeichnungselementes zu sehen, nicht jedoch die Form des Kennzeichnungselementes.

Mit der Ausgestaltung nach Anspruch 4 wird jedenfalls vermieden, dass - trotz der Möglichkeit, das Kennzeichnungselement in unterschiedlichen Orientierungen einsetzen zu können - die Prägung durch das Kennzeichnungselement in dem Produkt von einem zackenförmigen Kreis umgeben wird.

Bei der Ausgestaltung nach Anspruch 5 sind die Kennzeichnungselemente an ihrem Außenumfang so aufgebaut, dass sich oberhalb eines ersten Rings mit einem Außenumfang mit der Außenverzahnung ein zweiter Ring ohne eine Außenverzahnung befindet, wobei der äußere Radius des zweiten Rings zumindest so groß ist wie der äußere Radius des ersten Rings zuzüglich der Höhe eines Zahns der Außenverzahnung.

Die Verhältnisse sind bei der Ausgestaltung nach Anspruch 5 vergleichbar zur Ausgestaltung nach Anspruch 4 mit dem Unterschied, dass es bei Anspruch 5 um Ringe geht, während es bei der Ausgestaltung nach Anspruch 4 um kreisförmige Flächen ging.

Wie bei der Ausgestaltung nach Anspruch 4 auch, wird bei der Ausgestaltung nach Anspruch 5 ebenfalls vermieden, dass bei dem hergestellten Produkt die Kennzeichnung einen zackenförmigen Rand aufweist.

Bei der Ausgestaltung nach Anspruch 6 sind ringförmige Kennzeichnungselemente am Umfang ihrer inneren Öffnung so aufgebaut, dass sich oberhalb eines ersten Rings mit einem inneren Umfang mit der Innenverzahnung ein zweiter Ring ohne eine Innenverzahnung befindet. Der Radius der Öffnung des zweiten Rings ist dabei kleiner als der Radius der Öffnung des ersten Rings.

Der Radius der Öffnung des ersten Rings wird dabei gemessen ohne die Innenverzahnung.

Der innere Radius des zweiten Ringes kann um die Höhe eines Zahns der Innenverzahnung (oder einen größeren Betrag) kleiner sein als der Radius der Öffnung des ersten Rings. In diesem Fall ist die Innenverzahnung des ersten Rings bei einer Ansicht von oben auf das Kennzeichnungselement nicht sichtbar, weil die Innenverzahnung durch den zweiten Ring verdeckt ist.

Bei dieser Ausgestaltung werden vor dem Einsetzen in das Werkzeug zunächst das zweite Kennzeichnungselement in das erste Kennzeichnungselement eingesetzt. Das zweite Kennzeichnungselement weist dabei zwei übereinander angeordnete kreisförmige Scheiben auf. Der Radius dieser beiden Scheiben entspricht dabei dem Radius der inneren Öffnung des ringförmigen Kennzeichnungselementes (ersten Kennzeichnungselementes) nach Anspruch 6. Die erste (untere) Scheibe des zweiten Kennzeichnungselementes weist dabei eine Außenverzahnung auf, die mit der Innenverzahnung des ringförmigen Kennzeichnungselementes korrespondiert. Vor dem Einsetzen in das Werkzeug wird das zweite Kennzeichnungselement "von hinten" in das erste Kennzeichnungselement eingesetzt. Wenn das erste Kennzeichnungselement kraftschlüssig in dem Kennzeichnungsmittelträger des Werkzeugs gehalten wird, wird bei dieser Ausgestaltung damit auch das zweite Kennzeichnungselement gehalten. Der obere Ring des ersten Kennzeichnungselementes bildet dann eine Hinterschneidung für die Außenverzahnung des zweiten Kennzeichnungselementes, so dass diese dann durch das erste Kennzeichnungselement ebenfalls gehalten wird.

Bei der Ausgestaltung nach Anspruch 7 werden die Kennzeichnungselemente in dem als Ausnehmung gestalteten Kennzeichnungsmittelträger mittels magnetischer Kräfte gehalten.

Beispielsweise kann in das Werkzeug in der Umgebung der Ausnehmung ein Permanentmagnet integriert sein. Die magnetischen Anziehungskräfte können dann realisiert werden, indem das entsprechende Kennzeichnungselement aus einem Material mit paramagnetischen oder ferromagnetischen Eigenschaften besteht. Dadurch kann das Kennzeichnungselement beim Einsetzen in das Werkzeug sicher geführt werden. Außerdem wird das Kennzeichnungselement in der Folge sicher in der Position gehalten. Eine Entnahme des Kennzeichnungselementes - beispielsweise, um dieses mit einer anderen Orientierung erneut einzusetzen oder auch, um ein anderen Kennzeichnungselement einzusetzen - kann das Kennzeichnungselement entnommen werden, indem von außen ein stärkerer Magnet an das Kennzeichnungselement gehalten wird. Das Kennzeichnungselement wird dann von diesem stärkeren Magneten stärker angezogen als von dem Magneten in dem Werkzeug und kann damit entnommen werden.

Ein Ausführungsbeispiel der Erfindung ist in der Zeichnung dargestellt. Es zeigt dabei:
- Fig. 1:: eine Draufsicht auf die Kombination eines ersten und eines zweiten Kennzeichnungselementes,
- Fig. 2:: das erste und das zweite Kennzeichnungselement der Figur 1 in einem seitlichen Schnitt und
- Fig. 3:: eine Ansicht des ersten und des zweiten Kennzeichnungselementes der Figur 1 von unten.

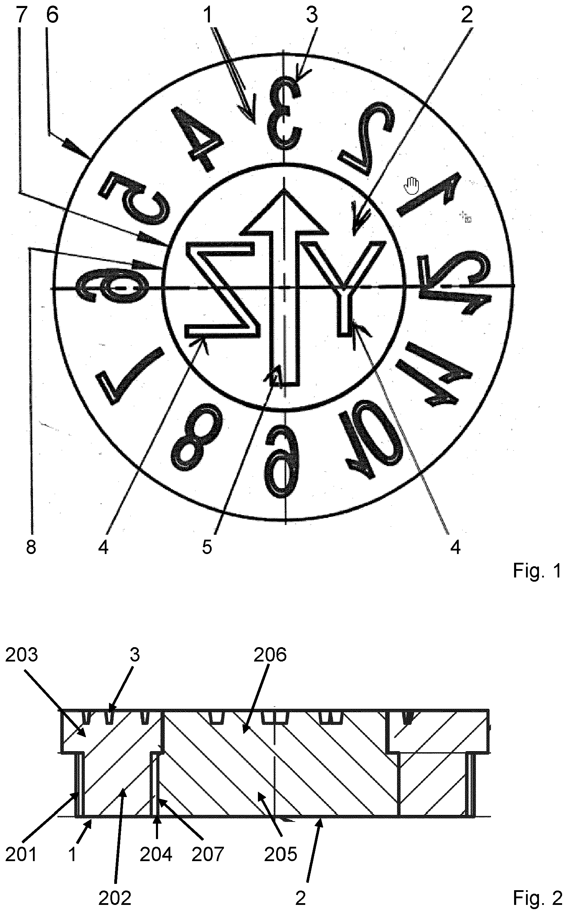

Figur 1 zeigt eine Draufsicht auf die Kombination eines ersten Kennzeichnungselementes 1 und eines zweiten Kennzeichnungselementes 2. Die beiden Kennzeichnungselemente 1 und 2 können beispielsweise verwendet werden, um einen Herstellungsmonat anzuzeigen. Dazu sind in dem ersten Kennzeichnungselement 1 in der Oberfläche Prägungen eingebracht, die den Monaten eines Jahres entsprechen. Eine dieser Prägungen (die Zahl 3) ist mit der Bezugsziffer 3 gekennzeichnet.

Die Prägungen sind bei den Kennzeichnungselementen 1 und 2 in Spiegelschrift, weil diese Kennzeichnungselemente 1 und 2 in das (hier nicht in den Figuren dargestellte) Werkzeug integriert werden, dass die Negativform für einen Gieß-, Blas- oder Tiefziehvorgang für das herzustellende Produkt darstellt.

Das zweite Kennzeichnungselement 2 kann Prägungen enthalten, die der Jahreszahl entsprechen. Diese Prägungen sind mit der Bezugsziffer 4 versehen. Außerdem ist noch eine Prägung 5 zu sehen, die einen Pfeil darstellt. Durch die Richtung dieses Pfeils 5 relativ zu den Prägungen des Kennzeichnungselementes kann die entsprechende Prägung angezeigt werden, die dem anzuzeigenden Monat entspricht. Hierzu ist das zweite Kennzeichnungselement 2 in seiner Orientierung relativ zu dem ersten Kennzeichnungselement 1 so positionierbar, dass dieser Pfeil 5 in den verschiedenen Positionen zumindest auf alle Prägungen der Zahlen des ersten Kennzeichnungselementes 1 zeigen kann, wenn die Orientierung des zweiten Kennzeichnungselementes zum ersten Kennzeichnungselement entsprechend eingestellt wird.

Es ist weiterhin zu sehen, dass das zweite Kennzeichnungselement 1 einen äußeren Umfang 6 aufweist sowie einen inneren Umfang 7. Das bedeutet, dass das erste Kennzeichnungselement 1 ringförmig ausgestaltet ist.

Das zweite Kennzeichnungselement 2 ist als kreisförmige Scheibe ausgestaltet, die einen Außenumfang 8 aufweist, der mit dem inneren Umfang 7 des ersten Kennzeichnungselementes 1 so korrespondiert, dass das zweite Kennzeichnungselement 2 in das erste Kennzeichnungselement 1 einsetzbar ist.

Figur 2 zeigt das erste Kennzeichnungselement 1 und das zweite Kennzeichnungselement 2 der Figur 1 in einem seitlichen Schnitt.

Das erste Kennzeichnungselement 1 weist eine Außenverzahnung 201 auf. Das Kennzeichnungselement 1 hat einen Aufbau, der aus zwei übereinander angeordneten Ringen besteht.

Der untere Ring 202 trägt die Außenverzahnung 201.

Oberhalb des unteren Rings 202 weist das Kennzeichnungselement 1 einen oberen Ring 203 auf. Dieser obere Ring 203 weist einen Außenumfang auf, der größer oder gleich dem Außenumfang des unteren Rings 202 zuzüglich der Höhe der Außenverzahnung 201 ist.

Damit bleibt bei der Ansicht von oben auf das Kennzeichnungselement 1 die Außenverzahnung 201 nicht sichtbar, weil diese durch den oberen Ring 203 mit dem größeren Außendurchmesser überdeckt wird.

In der Darstellung der Figur 2 ist weiterhin noch die Prägung 3 des ersten Kennzeichnungselementes 1 zu sehen.

Das erste Kennzeichnungselement 1 weist im Bereich des unteren Rings 202 noch eine Innenverzahnung 204 auf.

Es ist zu sehen, dass der Radius der Öffnung des oberen Rings 203 gerade so viel kleiner ist als der Radius der Öffnung des unteren Rings 202 (ohne Berücksichtig der Innenverzahnung 204), dass die Innenverzahnung des ersten Kennzeichnungselements 1 ebenfalls durch den oberen Ring 203 überdeckt wird und nicht sichtbar ist.

Außer diesem ersten Kennzeichnungselement 1 ist auch in der Darstellung der Figur 2 noch das zweite Kennzeichnungselement 2 zu sehen. Dieses zweite Kennzeichnungselement 2 besteht aus zwei übereinander angeordneten Scheiben - der unteren Scheibe 205 und der oberen Scheibe 206.

Die untere Scheibe 205 weist eine Außenverzahnung 207 auf. Damit korrespondiert der Radius der unteren Scheibe 205 sowie die Außerverzahnung 207 mit dem Radius der inneren Öffnung des unteren Rings 202 sowie der Innenverzahnung 204 derart, dass das zweite Kennzeichnungsmittel 2 in verschiedenen Orientierungen in das erste Kennzeichnungsmittel 1 eingesetzt werden kann.

Der obere Ring 203 überdeckt auch die Außenverzahnung der unteren Scheibe 205.

Der Radius der oberen Scheibe 206 und der Radius der Öffnung des oberen Rings 203 sind derart aufeinander abgestimmt, dass das zweite Kennzeichnungselement 2 in das erste Kennzeichnungselement 1 eingesetzt werden kann.

In dem Ausführungsbeispiel, das in den Figuren dargestellt ist, wird das zweite Kennzeichnungselement 2 "von unten" in das erste Kennzeichnungselement 1 eingesetzt. Das bedeutet, dass zweite Kennzeichnungselement 2 in der Zeichnungsebene von unten nach oben in das erste Kennzeichnungselement 1 eingeschoben wird. Durch den inneren Radius des oberen Rings 203 wird eine Hinterschneidung für die Außenverzahnung der unteren Scheibe 205 gebildet, so dass das zweite Kennzeichnungselement 2 gegenüber dem ersten Kennzeichnungselement in der Zeichnungsebene nicht noch oben herausgeschoben oder herausgezogen werden kann.

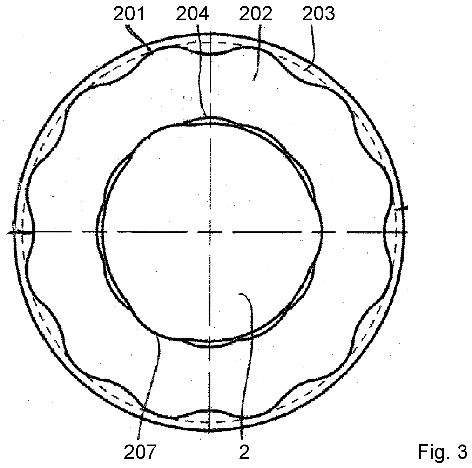

Figur 3 zeigt eine Ansicht des ersten und des zweiten Kennzeichnungselementes der Figur 1 von unten. Identische Teile zu den Figuren 1 und 2 sind mit denselben Bezugsziffern versehen.

## Patentansprüche

1. Werkzeug zur Herstellung von Produkten mittels eines Gieß-, Blas- oder Tiefzieh-Vorgangs, wobei das Werkzeug ein Flächenprofil aufweist, das als Negativform dem Flächenprofil der Oberfläche eines herzustellenden Produktes entspricht,
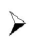 wobei das Werkzeug in dem Flächenprofil einen als Ausnehmung gestalteten Kennzeichnungsmittelträger aufweist für eine Aufnahme von ersten Kennzeichnungselementen (1), 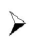 wobei
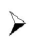 der als Ausnehmung gestaltete Kennzeichnungsmittelträger sowie
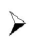 die ersten Kennzeichnungselemente (1) zueinander korrespondierend so ausgestaltet sind, dass die ersten Kennzeichnungselemente (1) formschlüssig (201) in verschiedenen Positionen mit unterschiedlichen und definierten Orientierungen in den als Ausnehmung gestalteten Kennzeichnungsmittelträger einsetzbar sind,
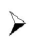 wobei die ersten Kennzeichnungselemente (1) eine als Ausnehmung gestaltete Aufnahme für zweite Kennzeichnungselemente (2) aufweisen, 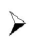 wobei
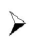 die als Ausnehmung gestaltete Aufnahme der ersten Kennzeichnungselemente (1) sowie
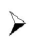 die zweiten Kennzeichnungselemente (2) zueinander korrespondierend so ausgestaltet sind, dass die zweiten Kennzeichnungselemente (2) formschlüssig (204, 207) in verschiedenen Positionen mit unterschiedlichen und definierten Orientierungen in die als Ausnehmung gestaltete Aufnahme der ersten Kennzeichnungselemente (1) einsetzbar sind,
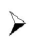 wobei die in die jeweiligen Ausnehmungen eingesetzten ersten und zweiten Kennzeichnungselemente (1, 2) Bestandteil des Flächenprofils des Werkzeugs sind, das als Negativform dem Flächenprofil der Oberfläche eines herzustellenden Produktes entspricht,
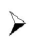 wobei die ersten und die zweiten Kennzeichnungselemente (1, 2) Vertiefungen oder Erhöhungen (3, 4, 5) aufweisen, die eine Negativform für die Kennzeichnung sind, die als Erhöhung aus der Oberfläche des Produktes hervortreten oder als Vertiefung in die Oberfläche des Produktes hineinragen.

2. Werkzeug nach Anspruch 1,
**dadurch gekennzeichnet**,
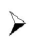 dass der als Ausnehmung gestaltete Kennzeichnungsmittelträger aus einer kreisförmigen Öffnung mit einer Innenverzahnung besteht und
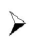 dass das erste Kennzeichnungsmittel aus einer kreisförmigen Scheibe oder einem Ring (202, 203) besteht mit einer Außenverzahnung (201) an der Umfangsseite der kreisförmigen Scheibe oder des Rings (202), 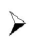 wobei
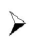 der Radius der kreisförmigen Öffnung, die den als Ausnehmung gestalteten Kennzeichnungsmittelträger bildet,
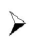 der Radius der kreisförmigen Scheibe oder des kreisförmigen Rings (202, 203) des ersten Kennzeichnungselementes (1) sowie
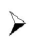 die Anzahl und Größe der Zähne der Innenverzahnung der kreisförmigen Öffnung, die den als Ausnehmung gestalteten Kennzeichnungsmittelträger bildet, und
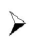 die Anzahl und Größe der Zähne der Außenverzahnung (201) des ersten Kennzeichnungselementes (1)
derart miteinander korrespondieren, dass das erste Kennzeichnungselement (1) formschlüssig in verschiedenen Positionen mit unterschiedlichen und definierten Orientierungen in die Aufnahme des Kennzeichnungsmittelträgers einsetzbar ist.

3. Werkzeug nach Anspruch 1 oder 2,
**dadurch gekennzeichnet**,
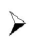 dass die Aufnahme des ersten Kennzeichnungselementes (1) aus einer kreisförmigen Öffnung mit einer Innenverzahnung (204) besteht und
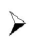 dass das zweite Kennzeichnungsmittel (2) aus einer kreisförmigen Scheibe (205, 206) mit einer Außenverzahnung (207) an der Umfangsseite der kreisförmigen Scheibe (205) besteht, 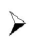 wobei
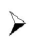 der Radius der kreisförmigen Öffnung des ersten Kennzeichnungselementes (1),
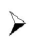 der Radius der kreisförmigen Scheibe (205, 206) des zweiten Kennzeichnungselementes (2) sowie
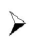 die Anzahl und Größe der Zähne der Innenverzahnung (204) der Aufnahme des ersten Kennzeichnungselementes (1) und
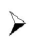 die Anzahl und Größe der Zähne der Außenverzahnung (207) des zweiten Kennzeichnungselementes (2)
derart miteinander korrespondieren, dass das zweite Kennzeichnungselement (2) formschlüssig in verschiedenen Positionen mit unterschiedlichen und definierten Orientierungen in die Aufnahme des ersten Kennzeichnungselementes (1) einsetzbar ist.

4. Werkzeug nach einem der Ansprüche 2 oder 3,
**dadurch gekennzeichnet,**
**dass** die Kennzeichnungselemente an ihrem Außenumfang so aufgebaut sind, dass sich oberhalb einer ersten Scheibe mit einer Außenverzahnung eine zweite Scheibe ohne eine Außenverzahnung befindet, wobei der Radius der zweiten Scheibe zumindest so groß ist wie der Radius der ersten Scheibe zuzüglich der Höhe eines Zahns der Außenverzahnung.

5. Werkzeug nach einem der Ansprüche 2 bis 4,
**dadurch gekennzeichnet,**
**dass** die Kennzeichnungselemente (1) an ihrem Außenumfang so aufgebaut sind, dass sich oberhalb eines ersten Rings (202) mit einem Außenumfang mit der Außenverzahnung (201) ein zweiter Ring (203) ohne eine Außenverzahnung befindet, wobei der äußere Radius des zweiten Rings (203) zumindest so groß ist wie der äußere Radius des ersten Rings (202) zuzüglich der Höhe eines Zahns der Außenverzahnung (201).

6. Werkzeug nach einem der Ansprüche 2 bis 4,
**dadurch gekennzeichnet,**
**dass** ringförmige Kennzeichnungselemente (1) am Umfang ihrer inneren Öffnung so aufgebaut sind, dass sich oberhalb eines ersten Rings (202) mit einem inneren Umfang mit der Innenverzahnung (204) ein zweiter Ring (203) ohne eine Innenverzahnung befindet, wobei der Radius der Öffnung des zweiten Rings (203) kleiner ist als der Radius der Öffnung des ersten Rings (202).

7. Werkzeug nach einem der Ansprüche 1 bis 6,
**dadurch gekennzeichnet, dass** die Kennzeichnungselemente (1, 2) in dem als Ausnehmung gestalteten Kennzeichnungsmittelträger mittels magnetischer Kräfte gehalten werden.
